# EUROPÄISCHE PATENTSCHRIFT

(11) **EP 3 394 495 B1**
(45) Veröffentlichungstag und Bekanntmachung des Hinweises auf die Patenterteilung: **06.11.2019**
(21) Anmeldenummer: 16820236.4
(22) Anmeldetag: 20.12.2016
(51) Int. Cl.: F16L 37/091

(54) **ZAHNSCHEIBE MIT MEHRSTEGIGEN HALTEZÄHNEN**
TOOTHED DISK HAVING MULTI-WEB HOLDING TEETH
DISQUE DENTÉ DOTÉ DE DENTS DE RETENUE À PLUSIEURS ÉLÉMENTS JOINTIFS

(30) Priorität: 23.12.2015 DE 102015122766
(43) Veröffentlichungstag der Anmeldung: 31.10.2018
(73) Patentinhaber: Voss Automotive GmbH, 51688 Wipperfürth (DE)
(72) Erfinder: HAGEN, Harald, 51688 Wipperfürth (DE); FRANGENBERG, Markus, 51789 Lindlar (DE); RÖHRIG, Lukas, 51709 Marienheide (DE); WASCHKEWITZ, Markus, 51702 Bergneustadt (DE)
(74) Vertreter: Patent- und Rechtsanwälte Dr. Solf & Zapf
(86) Internationale Anmeldenummer: PCT/EP2016/081828
(87) Internationale Veröffentlichungsnummer: WO 2017/108730

(56) Entgegenhaltungen:
- EP-A1- 0 631 081
- WO-A1-2005/024283
- DE-U1- 9 103 328
- DE-U1- 20 017 921
- US-A1- 2010 045 032

## Beschreibung

Die vorliegende Erfindung betrifft eine Zahnscheibe zum Fixieren einer durchgangssteckverbundenen Medienleitung, mit einer kreisförmigen Einstecköffnung, wobei an einem Umfang der Einstecköffnung angeordnete, jeweils durch einen Schlitz voneinander getrennte, nebeneinanderliegende, federelastische Haltezähne einen inneren Halteabschnitt bilden, wobei die Haltezähne in axialer Richtung zu einer senkrecht zur Kreisebene durch einen Mittelpunkt der Einstecköffnung verlaufende Längsachse derart geneigt verlaufen, dass die Haltezähne an ihrer von der Einstecköffnung abgewandten Seitenfläche mit einem Montageabschnitt einen stumpfen Winkel einschließen, wobei jeder Haltezahn über mindestens einen Verbindungssteg mit dem außen liegenden Montageabschnitt verbunden ist, wobei zwischen den Verbindungsstegen Ausstanzungen ausgebildet sind und wobei der Montageabschnitt jeweils auf einem Umfangskreis um die Einstecköffnung herum angeordnet ist und in einer Montageebene liegt, die parallel zur von der Einstecköffnung aufgespannten Kreisebene verläuft.

Eine gattungsgemäße Zahnscheibe ist aus der EP 1 561 989 B1 bekannt. Demnach umfasst eine Zahnscheibe einen äußeren kreisförmigen Montageabschnitt, an dem radial anschließend zum Mittelpunkt sechs Verbindungsstege angeordnet sind, wobei sich jedem Verbindungssteg umfangsgemäß mittig ein Haltezahn anschließt. Allerdings pendelt der Haltezahn im Falle einer durch die Zahnscheibe durchgeführten Medienleitung um die Drehachse des Verbindungssteges, wodurch die Haltekraft des Haltezahns nicht gewährleistet ist. Auch die DE 200 17 921 U1 und die US 2010/0045032 A1 offenbaren gattungsgemäße Zahnscheiben.

Der vorliegenden Erfindung liegt die Aufgabe zu Grunde, eine als Stanzformteil hergestellte Zahnscheibe der eingangs genannten Art zu schaffen, deren Haltezähne eine gute Haltefunktion aufweisen, wobei die Zahnscheibe nur geringe Steckkräfte zum Hindurchführen der Medienleitung erfordert, wobei jedoch im Belastungsfall eine hohe Haltekraft vorhanden ist.

Zur Lösung der vorgenannten Aufgabe sieht die Erfindung gemäß dem kennzeichnenden Teil des Anspruchs 1 vor, dass jeder Haltezahn des inneren Halteabschnitts durch mindestens zwei Verbindungsstege mit dem Montageabschnitt verbunden ist und der Montageabschnitt als ein geschlossener Ring ausgebildet ist. Die Verbindungsstege ermöglichen wegen des reduzierten Anbindungsbereichs zwischen dem Montageabschnitt und dem inneren Halteabschnitt eine erhöhte Beweglichkeit bzw. Federelastizität der Haltezähne. Die Biegesteifigkeit der Verbindungsstege wirkt derart mit der Beweglichkeit durch die Ausstanzungen zusammen, dass sich die Einsteckkräfte für die Medienleitung gut einstellen lassen. Zudem wird eine Pendelbewegung der Haltezähne durch die Verbindungsstege weitestgehend vermieden.

Besonders bevorzugt ist gemäß einer Ausgestaltung der Erfindung vorgesehen, dass die Verbindungsstege durch in Umfangsrichtung verlaufende, insbesondere kreisbogenförmige, Ausstanzungen gebildet sind. Zudem bevorzugt liegen diese Ausstanzungen auf einer kreisbogenförmigen Mittellinie auf einem zur Einstecköffnung kozentrischen Kreis.

Vorzugsweise weisen die Haltezähne gemeinsam einen umfangsgemäßen Umschlingungswinkel von mindestens 70, insbesondere von 75 % bis 95 % des Umfangs der Medienleitung auf. Dieser Umschlingungswinkel erhöht die auf die Medienleitung wirkende Haltekraft der Zahnscheibe.

Eine besonders bevorzugte Ausführungsform der Erfindung sieht vor, dass der innere Halteabschnitt drei bis sechs Haltezähne aufweist. Diese mit bis zu sechs Haltezähnen begrenzte Anzahl an Haltezähnen führt zu einem hohen Umschlingungsgrad der Medienleitung durch die Haltezähne, wobei die Anzahl der Haltezähne der Anzahl der Schlitze entspricht. Die voneinander beabstandeten Schlitze reduzieren wegen der reduzierten Kontaktfläche zwischen den Haltezähnen und der Medienleitung die benötigte Einsteckkraft für die Medienleitung und ermöglichen den Haltezähnen zudem Spiel beim Einnehmen ihrer Fixierstellung an der Medienleitung und verhindern so ein Verkanten der Haltezähne. Ferner steigt die Anzahl der Haltezähne mit steigendem Außendurchmesser der Medienleitung. Somit weist die Zahnscheibe für eine Medienleitung mit einem Außendurchmesser von 4,0 oder 6,0 mm vorzugsweise drei bis fünf Haltezähne auf. Für eine Medienleitung mit einem Außendurchmesser von 8,0 oder 10,0 mm weist die Zahnscheibe bevorzugt vier bis sechs Haltezähne auf und für eine Medienleitung mit einem Außendurchmesser von 12,0 mm umfasst die Zahnscheibe z.B. fünf oder sechs Haltezähne.

Gemäß einer vorzugsweisen Ausführungsform der Erfindung ist vorgesehen, dass jeder der Haltezähne einen mittleren Abschnitt aufweist, der zwischen den Verbindungsstegen angeordnet ist und Randabschnitte aufweist, die in Verlängerung des mittleren Abschnittes seitlich über die Verbindungsstege vorstehen und an den Schlitzen enden. Die umfangsgemäße Breite der mittleren Abschnitte bzw. der Randabschnitte ist derart bemessen, dass sie ausgehend von einer jeweiligen Mittellinie der Verbindungsstege bestimmt ist. Vorzugsweise beträgt die Breite der Randabschnitte ein Sechstel bis ein Viertel, vorzugsweise ein Fünftel, der Gesamtbreite der Haltezähne. Die umfangsgemäße Breite der mittleren Abschnitte beträgt vier Sechstel bis zwei Viertel, vorzugsweise drei Fünftel, der Gesamtbreite der Haltezähne. Unter Anwendung dieser Aufteilung ist eine gleichmäßige Verteilung der Stützkräfte zwischen den Verbindungsstegen und den Halteabschnitten gegeben. Durch die im umfangsgemäßen Bereich jedes Haltezahns vorwiegend nicht mittige Anordnung der Verbindungsstege wird ein sicherer Halt der Medienleitung gewährleistet, wobei der Haltezahn die Medienleitung mit gleichmäßigem Druck, also nicht nur umfangsgemäß mittig zum Haltezahn, beaufschlagt. Die zudem nicht vollständig in den Randabschnitten anordneten Verbindungsstege verhindern, dass die Haltezähne nur im Bereich der Randabschnitte in die Medienleitung greifen. Besonders bevorzugt sind die Haltezähne jeweils in Randabschnitt, mittleren Abschnitt und Randabschnitt wie folgt gegliedert:
- 1/6; 4/6; 1/6,
- 1/5; 3/5 ; 1/5 oder
- 1/4; 2/4; 1/4.

Hierdurch wird ein umfangsgemäßer Eingriff im Belastungsfall jedes Haltezahns in die Mantelfläche der Medienleitung sichergestellt.

Eine besonders bevorzugte Ausführungsform der Erfindung sieht vor, dass jeder Haltezahn derart ausgebildet ist, dass entlang der Einstecköffnung eine Endkante des Haltezahns verläuft, die jeweils in einem Eckbereich der Randabschnitte im Belastungsfall eine derartige Eindringtiefe in die Medienleitung aufweist, dass jeder Haltezahn mit seiner Endkante an der eingesteckten und fixierten Medienleitung einen Einzelumschlingungswinkel aufweist, in dem seine Kontaktfläche mit Fixierfunktion zwischen 55° und 105° eines Maximalumschlingungswinkels von 360° beträgt, wobei der Einzelumschlingungswinkel mit steigender Anzahl der Haltezähne abnimmt. Die vorgenannte Kontaktfläche ermöglicht es, eine für die zu fixierende Medienleitung durch den jeweiligen Haltezahn ausreichende Haltekraft einzustellen.

Gemäß einer bevorzugten Ausführung der Erfindung weist der Montageabschnitt eine radiale Breite von mindestens dem Zweifachen bis Vierfachen der Materialdicke auf, besonders bevorzugt beträgt die radiale Breite 0,5 mm bis 1,0 mm. Weiter vorzugsweise beträgt die Breite der Verbindungsstege in Umfangsrichtung gemessen z. B. das Zwei- bis Dreifache der Materialdicke des verwendeten Materials der Zahnscheibe. Zudem weisen die Schlitze insbesondere eine Breite von 0,15 mm bis 0,4 mm auf. Insbesondere bei einer Zahnscheibe, die nach mindestens einem der vorgenannten Merkmale ausgebildet ist, weisen ihre Haltezähne eine gute Haltefunktion auf, wobei die Zahnscheibe nur geringe Steckkräfte zum Hindurchführen der Medienleitung erfordert, wobei jedoch im Belastungsfall eine hohe Haltekraft vorhanden ist.

Weiter ist erfindungsgemäß eine Verbindungsanordnung zum Durchgangssteckverbinden einer Medienleitung vorgesehen. Die Verbindungsanordnung umfasst eine von einer Medienleitung entlang einer Durchgangsöffnung durchdrungene Überwurfmutter. Die Überwurfmutter ist in einer Einsteckrichtung vorne mit einer Anschlagbuchse verbunden und mit einem Aufnahmestutzen verbunden. Zudem weist die Überwurfmutter an ihrem in Einsteckrichtung hinteren Ende eine Radialdichtungsanordnung auf. Weiter ist zwischen dem in Einsteckrichtung vorderen Ende der Überwurfmutter und der Anschlagbuchse eine Zahnscheibe koaxial angeordnet. Die Zahnscheibe weist dabei mindestens eines der Merkmale der Ansprüche 1 bis 22 auf. Grundsätzlich kann die erfindungsgemäße Zahnscheibe bei jeder Einpress- oder Einstecklösung verwendet werden.

Anhand des in den beiliegenden Zeichnungen dargestellten Ausführungsbeispiels wird die Erfindung näher erläutert. Es zeigen:
- Fig. 1: eine schematische Vorderansicht einer erfindungsgemäßen Zahnscheibe,
- Fig. 2: einen Querschnitt der Zahnscheibe gemäß Fig. 1,
- Fig. 3: eine schematische Vorderansicht einer alternativen, erfindungsgemäßen Zahnscheibe mit drei Haltezähnen,
- Fig. 4: einen Querschnitt der Zahnscheibe gemäß Fig. 3,
- Fig. 5: eine schematische Vorderansicht einer weiteren alternativen, nicht erfindungsgemäßen Zahnscheibe mit einem Montageabschnitt aus vier Ringsegmenten,
- Fig. 6: einen Querschnitt der Zahnscheibe gemäß Fig. 5,
- Fig. 7: eine Explosionsdarstellung einer Verbindungsanordnung mit der erfindungsgemäßen Zahnscheibe,
- Fig. 8: die Verbindungsanordnung gemäß Fig. 7 in zusammengesetzter Form,
- Fig. 9: eine schematische Vorderansicht einer alternativen, erfindungsgemäßen Zahnscheibe mit fünf Haltezähnen und
- Fig. 10: eine Seitenansicht der Zahnscheibe gemäß Fig. 9.

In den verschiedenen Figuren der Zeichnung sind gleiche Teile stets mit denselben Bezugszeichen versehen.

In der Beschreibung und den Figuren sind auch Ausführungsformen angegeben, in denen der Montageabschnitt der Zahnscheibe nicht als geschlossener Ring ausgebildet ist. Diese Ausführungsformen sind nicht in den Ansprüchen erfasst. Hierbei handelt es sich nicht um Ausführungsformen der Erfindung, sondern um Aspekte, die das Verständnis der Erfindung erleichtern.

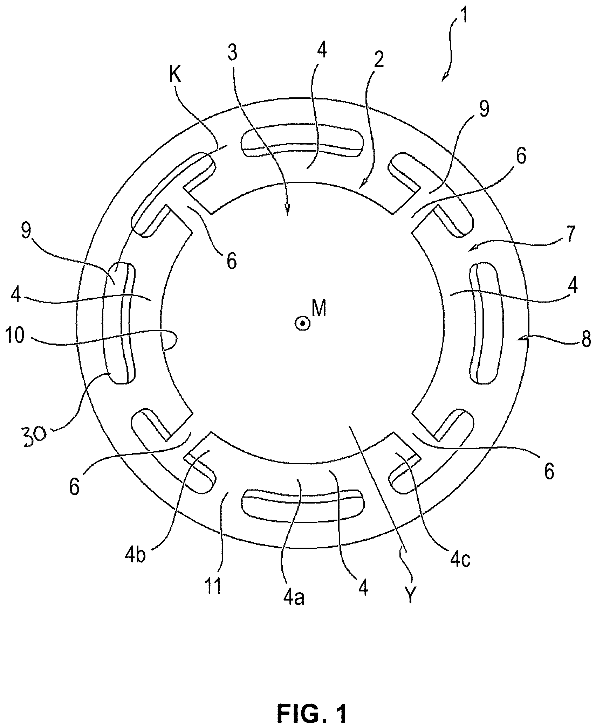

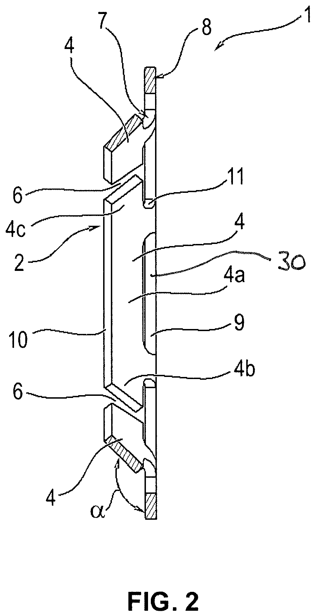

In den Fig. 1 und 2 ist eine Ausführungsform einer erfindungsgemäßen Zahnscheibe 1 dargestellt.

Eine erfindungsgemäße Zahnscheibe 1 weist einen inneren Halteabschnitt 2 auf, der eine kreisförmige Einstecköffnung 3 umschließt. Der Halteabschnitt 2 wird von an einem Umfang der Einstecköffnung 3 angeordneten, voneinander beabstandet liegenden Haltezähnen 4 gebildet. Diese Haltezähne 4 sind radial federelastisch ausgebildet und sind durch Schlitze 6 voneinander getrennt. Der Halteabschnitt 2 ist über einen Zwischenabschnitt 7 mit einem außen liegenden Montageabschnitt 8 verbunden. Der Zwischenabschnitt 7 und der Montageabschnitt 8 sind jeweils auf einem Umfangskreis um die Einstecköffnung herum angeordnet. Hierbei liegt der Montageabschnitt 8 in einer planen Montageebene, die parallel zur von der Einstecköffnung 3 aufgespannten Kreisebene verläuft. Die Haltezähne 4 verlaufen in axialer Richtung zu einer senkrecht zur Kreisebene durch einen Mittelpunkt M der Einstecköffnung 3 verlaufende Längsachse geneigt, so dass die Haltezähne 4 an ihrer von der Einstecköffnung 3 abgewandten Seitenfläche mit dem Montageabschnitt 8 einen stumpfen Winkel α einschließen. Dieser stumpfe Winkel α beträgt 120° bis 150°, vorzugsweise 130° bis 140°. Die Abbiegung der Haltezähne 4 erfolgt insbesondere im Bereich des Zwischenabschnitts 7.

Gemäß der Erfindung und in Fig. 1 dargestellt ist vorgesehen, dass die einzelnen Haltezähne 4 nicht über ihre gesamte umfangsgemäße Breite mit dem Montageabschnitt 8 verbunden sind, sondern durch mindestens zwei Verbindungsstege 11, die den Zwischenabschnitt 7 bilden. Diese Verbindungsstege 11 werden durch kreisbogenförmige Ausstanzungen 9 gebildet, die auf einem Kreis liegen, der konzentrisch zur Einstecköffnung 3 verläuft. Die Breite der Verbindungsstege 11 in Umfangsrichtung gemessen beträgt insbesondere das Zweibis Dreifache der Materialdicke des verwendeten Materials der Zahnscheibe 1.

Der Montageabschnitt 8 ist erfindungsgemäß als geschlossener Ring ausgebildet. Das bedeutet, dass der Montageabschnitt 8 den Mittelpunkt M der Einstecköffnung 3 über einen Winkel von 360° umfangsgemäß umschließt. Ein als geschlossener Ring ausgebildeter Montageabschnitt 8 hat den Vorteil, dass der Montageabschnitt 8 nicht radial vom Mittelpunkt M nach außen, d. h. in eine von dem Mittelpunkt M wegzeigende Richtung, verdrängt werden kann. Hierdurch sind mehr Montagepositionen für die Zahnscheibe 1 möglich. Besonders bevorzugt ist der Montageabschnitt 8 kreisförmig ausgebildet, was mit Vorteil eine Verdrängung der Zahnscheibe 1 nach außen weiter reduziert.

Insbesondere weist jeder Haltezahn 4 eine umfangsgemäß geschlossene Ausstanzung 9 auf. Vorzugsweise umschließt ein umfangsgemäß über einen Winkel von 360° an der Zahnscheibe 1 ausgebildeter Rand 30 die geschlossene Ausstanzung 9 vollständig. Das heißt, dass die umfangsgemäß geschlossene Ausstanzung 9 nicht mit einem Schlitz 6 verbunden ist. Hierdurch wird durch die Haltezähne 4 eine gleichmäßige Haltekraft auf einen Mantel einer angeschlossenen Medienleitung 16 ausgeübt.

Der umfangsgemäß über einen Winkel von 360° die geschlossene Ausstanzung 9 umschließende Rand 30 ist zweckmäßigerweise an dem Haltezahn 4, an den zwei Verbindungsstegen 11 und an dem Montageabschnitt 8 ausgebildet.

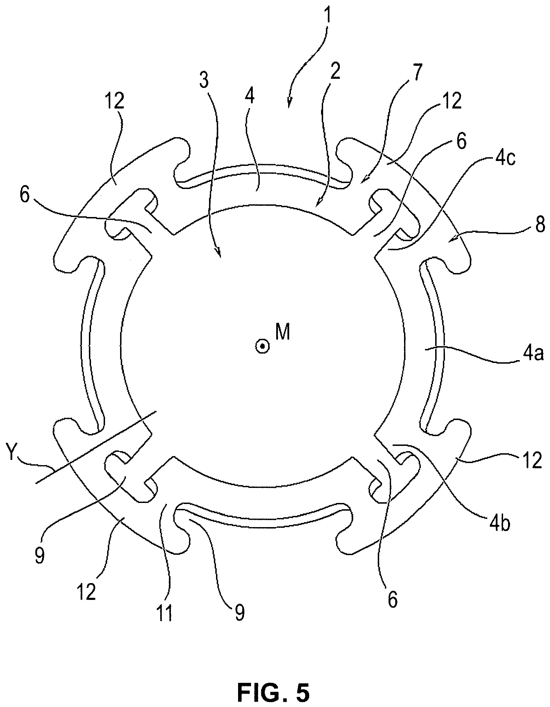

Die erfindungsgemäße Zahnscheibe 1 ist als Stanz-Biegeteil ausgebildet und besteht aus federelastischem Material, insbesondere aus Federstahl. Das federelastische Material besitzt vorzugsweise eine Materialdicke von 0,1 mm bis 0,4 mm, insbesondere von 0,2 mm bis 0,25 mm. Die Haltezähne 4 werden in einem Stanz-Biegevorgang hergestellt. Hierdurch erweitern sich die zwischen den Haltezähnen 4 vorhandenen Schlitze 6 von außen nach innen, d. h., zur Einstecköffnung 3. Die Schlitze 6 sind durch Materialabtrag hergestellt und haben eine Breite von 0,15 mm bis 0,4 mm. Die Einstecköffnung 3 besitzt im gestanzten Zustand vor dem Abbiegen der Haltzähne 4 einen Durchmesser, der insbesondere 5 % bis 15 % kleiner ist als ein Außendurchmesser der durch die Einstecköffnung 3 verlaufenden Medienleitung 16, auf der die erfindungsgemäße Zahnscheibe 1 im aufgesteckten Zustand kraftschlüssig und im Belastungsfall kraftformschlüssig angeordnet ist. Nach dem Abbiegen der Haltzähne 4 besitzt die Einstecköffnung 3 einen Durchmesser, der kleiner ist als der Außendurchmesser der Medienleitung 16 und insbesondere 2 % bis 10 % größer ist als der Durchmesser der Einstecköffnung 3 vor dem Abbiegen der Haltezähne 4. Der Außendurchmesser einer derartigen Medienleitung 16, siehe Fig. 5, beträgt vorzugsweise 4,0 mm, 6,0 mm, 8,0 mm, 10 mm oder 12 mm. Die erfindungsgemäße Zahnscheibe 1 besitzt bei den bevorzugten Medienleitungsgrößen 4,0 mm, 6,0 mm oder 8,0 mm in gleicher Reihenfolge einen Außendurchmesser von vorzugsweise 6,8 mm, 8,6 mm oder 10,8 mm. Der Innendurchmesser der Einstecköffnung 3 nach dem Biegevorgang der Haltezähne 4 beträgt bei den vorstehenden Medienleitungsgrößen gemäß der vorgenannten Reihenfolge insbesondere 3,5 mm, 5,4 mm oder 7,3 mm. Die Wandstärke der Medienleitung beträgt bei den vorgenannten Medienleitungsgrößen jeweils z.B. 1 mm.

Der Montageabschnitt 8 besitzt eine radiale Breite von vorzugsweise mindestens dem Zweifachen bis Vierfachen der Materialdicke und beträgt vorzugsweise 0,5 mm bis 1,0 mm.

Bei der erfindungsgemäßen Zahnscheibe 1 liegen die Halteabschnitte 4 mit ihren Endkanten 10 demnach auf einem Kreis, dessen Durchmesser kleiner ist als der Außendurchmesser einer in die Einstecköffnung 3 eingesteckten Medienleitung 16.

In den Fig. 1 und 2 ist ein Ausführungsbeispiel dargestellt, bei dem am Umfang der Einstecköffnung 3 gleich große Haltezähne 4 ausgebildet sind. Diese Haltezähne 4 besitzen gemeinsam einen umfangsgemäßen Umschlingungswinkel, der sich aus der Summe der Einzelumschlingungswinkel der Haltezähne 4 zusammensetzt und der mindestens 70 %, vorzugsweise 75 % bis 95 % eines Maximalumschlingungswinkels von 360° beträgt. Aufgrund des hohen Umschlingungswinkels ergibt sich ein großer Haltebereich für die Medienleitung.

Im dargestellten Ausführungsbeispiel nach Fig. 1 sind vier Haltezähne 4 dargestellt. Ebenfalls zweckmäßig können aber auch drei bis sechs Haltezähne 4 an der Zahnscheibe 1 ausgebildet sein. Die Anzahl der Haltezähne 4 steigt mit steigendem Außendurchmesser der Medienleitung 16. Die Zahnscheibe 1 weist für eine Medienleitung 16 mit einem Außendurchmesser von 4,0 oder 6,0 mm vorzugsweise drei bis fünf Haltezähne 4 auf. Für eine Medienleitung 16 mit einem Außendurchmesser von 8,0 oder 10,0 mm weist die Zahnscheibe 1 bevorzugt vier bis sechs Haltezähne 4 auf und für eine Medienleitung 16 mit einem Außendurchmesser von 12,0 mm umfasst die Zahnscheibe 1 z.B. fünf oder sechs Haltezähne 4.

Jeder der Haltezähne 4 besitzt einen mittleren Abschnitt 4a, der zwischen den Verbindungsstegen 11 angeordnet ist und Randabschnitte 4b, 4c, die in Verlängerung des mittleren Abschnittes 4a seitlich über die Verbindungsstege 11 vorstehen und an den Schlitzen 6 enden. Die umfangsgemäße Breite der mittleren Abschnitte 4a bzw. Randabschnitte 4b, 4c ist vorzugsweise derart bemessen, dass sie ausgehend von einer Mittellinie Y der Verbindungsstege 11 bestimmt wird. Die Breite der Randabschnitte 4b und 4c beträgt vorzugsweise jeweils ein Sechstel bis ein Viertel, besonders bevorzugt ein Fünftel, der Gesamtbreite der Haltezähne 4, und die umfangsgemäße Breite der mittleren Abschnitte 4a beträgt vorzugsweise jeweils vier Sechstel bis zwei Viertel, besonders bevorzugt drei Fünftel, der Gesamtbreite der Haltezähne 4.

Gemäß der Erfindung gehen die Schlitze 6 jeweils von einer der Ausstanzungen 9 aus. Nicht jeder Ausstanzung 9 muss sich ein Schlitz 6 anschließen. Die Ausstanzungen 9, in denen die Schlitze 6 enden, besitzen eine geringere umfangsgemäße Breite als die übrigen Ausstanzungen 9 zur Ausbildung der Verbindungsstege 11, was sich aus den vorstehenden Abmessungen der Breiten der mittleren Abschnitte 4a bzw. Randabschnitte 4b und 4c der Haltezähne 4 ableitet.

Durch die Anbindung der Haltezähne 4 über die Verbindungsstege 11 wird die Federelastizität der Haltezähne 4 erhöht im Vergleich zu einer nicht unterbrochenen Verbindung zwischen den Haltezähnen 4 und dem Zwischenabschnitt 7, d. h. einer vollflächigen Anbindung der Haltezähne 4.

Weiter ist in Fig. 1 die kreisbogenförmige Mittellinie K an einer Ausstanzung 9 schematisch als Ausschnitt eines insgesamt vollständigen Kreisbogens dargestellt, der die Mittellinie K für alle Ausstanzungen 9 sämtlicher Ausführungsformen bilden kann. Ebenfalls ist ein radialer Versatz der Ausstanzungen 9 zueinander möglich.

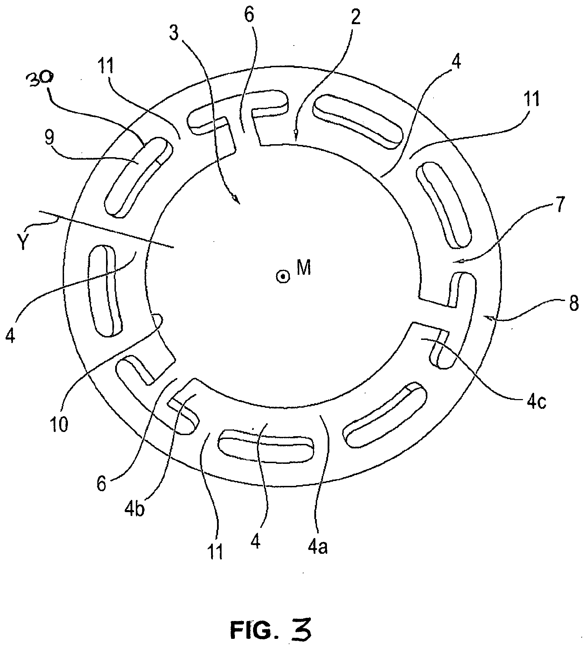

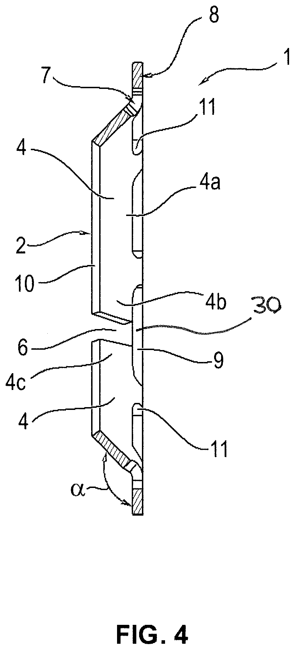

In den Fig. 3 und 4 ist eine erfindungsgemäße Ausführung einer Zahnscheibe 1 mit drei Haltezähnen 4 dargestellt, die jeweils über drei Verbindungsstege 11 mit dem Montageabschnitt 8 verbunden sind. Hierbei beträgt die umfangsgemäße Breite der Randabschnitte 4b und 4c, die an den Schlitzen 6 enden, z. B. ein Sechstel der umfangsgemäßen Gesamtbreite der Haltezähne 4, und der zwischen den Randabschnitten 4b und 4 c liegende mittlere Abschnitt 4a besitzt eine Breite von vier Sechstel der Haltezahn-Gesamtbreite. Bei dieser Ausführung sind die Ausstanzungen 9 derart, dass sie umfangsgemäß gesehen die gleiche Breite besitzen, und die jeweils außen liegenden Verbindungsstege 11 haben denselben Abstand zu dem dritten, zwischen ihnen verlaufenden Verbindungssteg 11. Was die Bemessung der erfindungsgemäßen Zahnscheibe 1 bei diesem Ausführungsbeispiel betrifft, so wird im Übrigen auf die vorstehende Beschreibung verwiesen, so dass die darin genannten Abmessungen und Größenverhältnisse für die einzelnen Merkmale der erfindungsgemäßen Zahnscheibe 1 ebenfalls gelten.

Für die Ausführung einer erfindungsgemäßen Zahnscheibe 1 ist es wesentlich, dass die Haltezähne 4 derart bemessen sind, dass ihre Endkante 10 im Eckbereich der Randabschnitte 4b, 4c im Belastungsfall in der eingesteckten und fixierten Medienleitung eine Eindringtiefe besitzt, wobei ihre Endkante 10 eine derartige Eindringtiefe hat, dass der Haltezahn 4 an seiner Endkante 10 einen Einzelumschlingungswinkel aufweist, in dem seine Kontaktfläche mit Fixierfunktion zwischen 55° und 105° eines Maximalumschlingungswinkels von 360° beträgt, wobei der Einzelumschlingungswinkel mit steigender Anzahl der Haltezähne abnimmt.

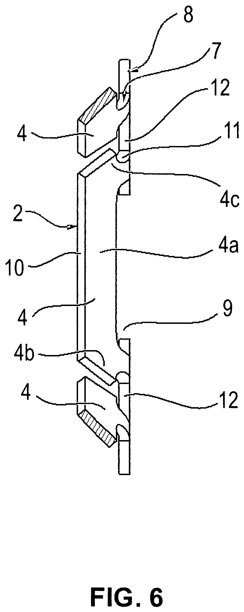

In den Fig. 5 und 6 ist eine weitere Ausführungsform einer nicht erfindungsgemäßen Zahnscheibe 1 dargestellt. Was die Ausbildung dieser Zahnscheibe 1 betrifft, so kann sie, was ihre einzelnen Gestaltungsmerkmale und Abmessungen und Größenverhältnisse betrifft, entsprechend wie vorstehend insbesondere zu den Fig. 1 bis 4 beschrieben, ausgebildet sein. Hierbei besteht jedoch der Unterschied, dass der äußere Montageabschnitt 8 nicht, wie in den Fig. 1 und 4 dargestellt, als geschlossener Ring ausgebildet ist, sondern der Montageabschnitt 8 aus mindestens drei - gleich beabstandeten - Ringsegmenten 12 gebildet ist, die jeweils die an die Schlitze 6 angrenzenden Verbindungsstege 11 verbinden. In den Fig. 5 und 6 sind vier gleich beabstandet zueinander ausgebildete Ringsegmente 12 ausgebildet. Somit umfassen bei dieser Ausführungsform die zwischen den außen liegenden Verbindungsstegen 11 liegenden Ausstanzungen 9 auch den Bereich des Montageabschnittes 8.

Die Schlitze 6 sind vorzugsweise als Radialausstanzungen mit Materialabtrag ausgebildet.

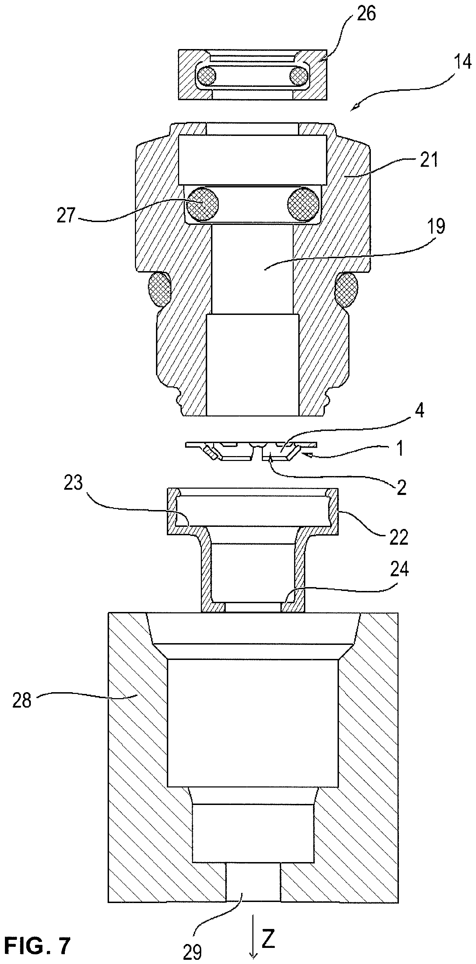

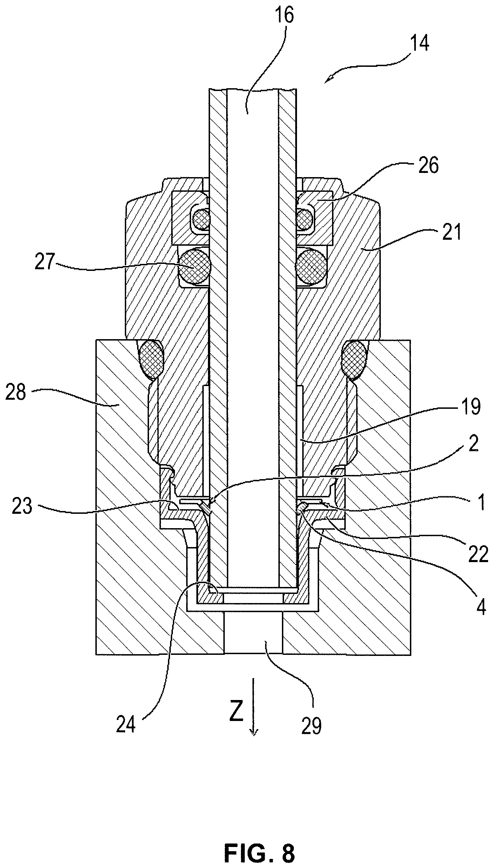

Die Fig. 7 und 8 zeigen eine mögliche Ausführungsform einer Verbindungsanordnung 14 zum Durchgangssteckverbinden einer Medienleitung 16 unter Verwendung der erfindungsgemäßen Zahnscheibe 1. Die Medienleitung 16 durchdringt eine Durchgangsöffnung 19 einer Überwurfmutter 21 bis zu einer in Einsteckrichtung Z am Ende der Überwurfmutter 21 angeordneten Anschlagbuchse 22. Die Zahnscheibe 1 ist zwischen dem vorgenannten Ende der Überwurfmutter 21 und einer kreisförmigen Auflageschulter 23 der Anschlagbuchse 22 angeordnet. Im eingesteckten Zustand der Medienleitung 16 greifen die Haltezähne 4 des inneren Halteabschnitts 2 in eine äußere Mantelfläche der Medienleitung 16, wodurch die Medienleitung 16 gegen axiales Verschieben entgegen der Einsteckrichtung Z begrenzt ist. Zudem ist die Medienleitung 16 gegen axiales Verschieben entlang der Einsteckrichtung Z durch eine in Einsteckrichtung Z vorne an der Anschlagbuchse 22 angeordnete kreisförmige Widerlagerschulter 24 gesichert. Die Überwurfmutter 21 weist an ihrem in Einsteckrichtung Z entfernten Ende eine Radialdichtungsanordnung 26 mit einer O-Ring-Anordnung 27 auf, um einen Medienaustritt bei vorhandenem Systemdruck zu vermeiden. Die Überwurfmutter 21 ist mit einem Aufnahmestutzen 28 verbunden. In den Fig. 7 und 8 ist gemäß einer vorzugsweisen Ausführungsform die Überwurfmutter 21 über ein Außengewinde mit einem Innengewinde des Aufnahmestutzens 28 verschraubt. Schließlich weist der Aufnahmestutzen 28 eine zur Medienleitung 16 und zur Durchgangsöffnung 19 der Überwurfschraube 21 koaxiale Aufnahmeöffnung 29 auf.

Mithin umfasst die Ausführungsform gemäß den Fig. 7 und 8 eine dornlose Verbindungsanordnung, wobei die Verbindung nach dem "Dichten vor Halten"-Prinzip erfolgt, d.h., dass die Zahnscheibe 1 in Einsteckrichtung Z hinter dem Dichtbereich liegt. Alternativ möglich, jedoch nicht dargestellt, ist eine Verbindung nach dem "Halten vor Dichten"-Prinzip realisierbar, wobei die Zahnscheibe 1 in Einsteckrichtung Z vor dem Dichtbereich liegt.

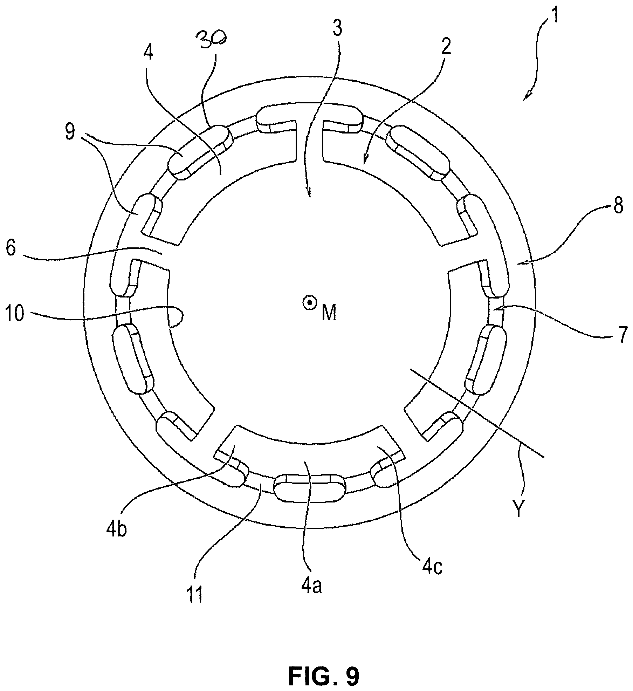

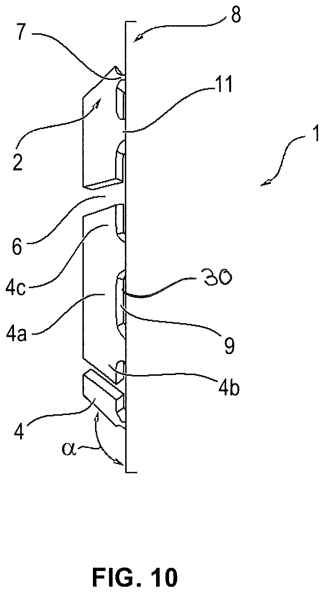

Die Fig. 9 und 10 zeigen eine alternative Ausführungsform der erfindungsgemäßen Zahnscheibe 1 mit insgesamt fünf Haltezähnen 4, wobei die Ausstanzungen 9, in denen kein Schlitz 6 mündet jeweils eine geringere umfangsgemäße Breite aufweisen als die Ausstanzungen 9, in denen jeweils ein Schlitz 6 mündet.

### Bezugszeichenliste

- 1: Zahnscheibe
- 2: Innerer Halteabschnitt
- 3: Kreisförmige Einstecköffnung
- 4: Haltezähne
- 4a: Abschnitt
- 4b: Randabschnitte
- 4c: Randabschnitte
- 6: Schlitze
- 7: Zwischenabschnitt
- 8: Montageabschnitt
- 9: Ausstanzung
- 10: Endkanten des Halteabschnitts
- 11: Verbindungsstege
- 12: Ringsegmente
- 14: Verbindungsanordnung
- 16: Medienleitung
- 19: Durchgangsöffnung
- 21: Überwurfmutter
- 22: Anschlagbuchse
- 23: Kreisförmige Auflageschulter
- 24: Kreisförmige Widerlagerschulter
- 26: Radialdichtungsanordnung
- 27: O-Ring-Anordnung
- 28: Aufnahmestutzen
- 29: Aufnahmeöffnung
- 30: Rand

- K: Kreisbogenförmige Mittellinie
- M: Mittelpunkt der Einstecköffnung
- Y: Jeweilige Mittellinie der Verbindungsstege
- Z: Einsteckrichtung

## Patentansprüche

1. Zahnscheibe (1) zum Fixieren einer Medienleitung (16), mit einer kreisförmigen Einstecköffnung (3), wobei an einem Umfang der Einstecköffnung (3) angeordnete, jeweils durch einen mittels Scherschneiden gebildeten Schlitz (6) voneinander getrennte, nebeneinanderliegende, federelastische Haltezähne (4) einen inneren Halteabschnitt (2) bilden, wobei die Haltezähne (4) in axialer Richtung zu einer senkrecht zur Kreisebene durch einen Mittelpunkt (M) der Einstecköffnung (3) verlaufende Längsachse derart geneigt verlaufen, dass die Haltezähne (4) mit einem Montageabschnitt (8) einen stumpfen Winkel (a) einschließen, wobei jeder Haltezahn (4) über mindestens einen Verbindungssteg (11) mit dem außen liegenden Montageabschnitt (8) verbunden ist, wobei zwischen den Verbindungsstegen (11) Ausstanzungen (9) ausgebildet sind und wobei der Montageabschnitt (8) jeweils auf einem Umfangskreis um die Einstecköffnung (3) herum angeordnet ist und in einer Montageebene liegt, die parallel zur von der Einstecköffnung (3) aufgespannten Kreisebene verläuft, wobei jeder Haltezahn (4) des inneren Halteabschnitts (2) durch mindestens zwei Verbindungsstege (11) mit dem Montageabschnitt (8) verbunden ist, **dadurch gekennzeichnet, dass** der Montageabschnitt (8) als ein geschlossener Ring ausgebildet ist.

2. Zahnscheibe (1) nach Anspruch 1,
**dadurch gekennzeichnet, dass** die Haltezähne (4) gemeinsam einen umfangsgemäßen Umschlingungswinkel von mindestens 70 %, insbesondere von 75 % bis 95 % des Umfangs der Medienleitung (16) aufweisen.

3. Zahnscheibe (1) nach Anspruch 1 oder 2,
**dadurch gekennzeichnet, dass** die Verbindungsstege (11) durch in Umfangsrichtung verlaufende, insbesondere kreisbogenförmige, Ausstanzungen (9) gebildet sind.

4. Zahnscheibe (1) nach Anspruch 3,
**dadurch gekennzeichnet, dass** die Ausstanzungen (9) auf einer kreisbogenförmigen Mittellinie (K) auf einem zur Einstecköffnung (3) kozentrischen Kreis liegen.

5. Zahnscheibe (1) nach einem der Ansprüche 1 bis 4,
**dadurch gekennzeichnet, dass** der innere Halteabschnitt (2) drei bis sechs Haltezähne (4) aufweist.

6. Zahnscheibe (1) nach einem der Ansprüche 1 bis 5,
**dadurch gekennzeichnet, dass** die Haltezähne (4) die gleichen Abmessungen haben.

7. Zahnscheibe (1) nach einem der Ansprüche 1 bis 6,
**dadurch gekennzeichnet, dass** jeder der Haltezähne (4) einen mittleren Abschnitt (4a) aufweist, der zwischen den Verbindungsstegen (11) angeordnet ist und Randabschnitte (4b, 4c), die in Verlängerung des mittleren Abschnittes (4a) seitlich über die Verbindungsstege (11) vorstehen und an den Schlitzen (6) enden, wobei die umfangsgemäße Breite der mittleren Abschnitte (4a) bzw. Randabschnitte (4b und 4c) derart bemessen ist, dass sie ausgehend von einer Mittellinie (Y) der Verbindungsstege (11) bestimmt ist, und wobei die Breite der Randabschnitte (4b, 4c) ein Sechstel bis ein Viertel, vorzugsweise ein Fünftel, der Gesamtbreite der Haltezähne (4) beträgt, und die umfangsgemäße Breite der mittleren Abschnitte (4a) vier Sechstel bis zwei Viertel, vorzugsweise drei Fünftel, der Gesamtbreite der Haltezähne (4) beträgt.

8. Zahnscheibe (1) nach einem der Ansprüche 1 bis 7,
**dadurch gekennzeichnet, dass** die Zahnscheibe (1) als Stanz-Biegeteil ausgebildet ist und aus federelastischem Material, insbesondere aus Federstahl besteht.

9. Zahnscheibe (1) nach Anspruch 8,
**dadurch gekennzeichnet, dass** das federelastische Material eine Materialdicke von 0,1 mm bis 0,4 mm, insbesondere von 0,2 mm bis 0,25 mm, aufweist.

10. Zahnscheibe (1) nach einem der Ansprüche 1 bis 9,
**dadurch gekennzeichnet, dass** der Montageabschnitt (8) eine radiale Breite von mindestens dem Zweifachen bis Vierfachen der Materialdicke aufweist und vorzugsweise 0,5 mm bis 1,0 mm beträgt.

11. Zahnscheibe (1) nach einem der Ansprüche 1 bis 10,
**dadurch gekennzeichnet, dass** die Breite der Verbindungsstege (11) in Umfangsrichtung gemessen das Zwei- bis Dreifache der Materialdicke des verwendeten Materials der Zahnscheibe (1) beträgt.

12. Zahnscheibe (1) nach einem der Ansprüche 1 bis 11,
**dadurch gekennzeichnet, dass** der stumpfe Winkel (a) 120° bis 150°, vorzugsweise 130° bis 140° beträgt.

13. Zahnscheibe (1) nach einem der Ansprüche 1 bis 12,
**dadurch gekennzeichnet, dass** die Schlitze (6) eine Breite von 0,15 mm bis 0,4 mm aufweisen.

14. Zahnscheibe (1) nach einem der Ansprüche 3 bis 13,
**dadurch gekennzeichnet, dass** jeder Schlitz (6) jeweils von einer der Ausstanzungen (9) ausgeht.

15. Zahnscheibe (1) nach Anspruch 14,
**dadurch gekennzeichnet, dass** die Ausstanzungen (9), in denen die Schlitze (6) enden, umfangsgemäß eine geringere Breite aufweisen als die übrigen Ausstanzungen (9).

16. Zahnscheibe (1) nach einem der Ansprüche 3 bis 14,
**dadurch gekennzeichnet, dass** alle Ausstanzungen (9) umfangsgemäß die gleiche Breite aufweisen.

17. Zahnscheibe (1) nach einem der Ansprüche 1 bis 16,
**dadurch gekennzeichnet, dass** die Einstecköffnung (3) nach dem Stanzen und vor dem Abbiegen 5 bis 15 % kleiner ist als der Außendurchmesser der durch die Einstecköffnung (3) durchzuführenden Medienleitung.

18. Zahnscheibe (1) nach einem der Ansprüche 1 bis 17,
**dadurch gekennzeichnet, dass** der Durchmesser der Einstecköffnung (3) nach dem Abbiegen kleiner ist als der Außendurchmesser der Medienleitung (16) und insbesondere 2 % bis 10 % größer ist als der Durchmesser der Einstecköffnung (3) vor dem Abbiegen der Haltezähne (4).

19. Zahnscheibe (1) nach einem der Ansprüche 1 bis 18,
**dadurch gekennzeichnet, dass** jeder Haltezahn (4) derart ausgebildet ist, dass entlang der Einstecköffnung (3) eine Endkante (10) des Haltezahns (4) verläuft, die jeweils in einem Eckbereich der Randabschnitte (4b, 4c) im Belastungsfall eine derartige Eindringtiefe in die Medienleitung (16) aufweist, dass jeder Haltezahn (4) mit seiner Endkante (10) an der eingesteckten und fixierten Medienleitung (16) einen Einzelumschlingungswinkel aufweist, in dem seine Kontaktfläche mit Fixierfunktion zwischen 55° und 105° eines Maximalumschlingungswinkels von 360° beträgt.

20. Zahnscheibe (1) nach einem der Ansprüche 1 bis 19,
**dadurch gekennzeichnet, dass** die Schlitze (6) als Radialausstanzungen mit Materialabtrag ausgebildet sind.

21. Zahnscheibe (1) nach einem der Ansprüche 1 bis 20,
**dadurch gekennzeichnet, dass** jeder Haltezahn (4) eine umfangsgemäß geschlossene Ausstanzung (9) aufweist, wobei die geschlossene Ausstanzung (9) von einem umfangsgemäß an der geschlossenen Ausstanzung (9) ausgebildeten Rand (30) über einen Winkel von 360° umschlossen ist.

22. Zahnscheibe (1) nach Anspruch 21,
**dadurch gekennzeichnet, dass** der umfangsgemäß über einen Winkel von 360° die Ausstanzung (9) umschließende Rand (30) ausschließlich an dem Haltezahn (4), an den zwei Verbindungsstegen (11) und an dem Montageabschnitt (8) ausgebildet ist.

23. Verbindungsanordnung zum Durchgangssteckverbinden von einer Medienleitung (16), umfassend eine Zahnscheibe (1) und eine von der Medienleitung (16) entlang einer Durchgangsöffnung (19) durchdrungene Überwurfmutter (21), wobei die Überwurfmutter (21) in einer Einsteckrichtung (Z) vorne mit einer Anschlagbuchse (22) verbunden ist und mit einem Aufnahmestutzen (28) verbunden ist, wobei die Überwurfmutter (21) an ihrem in Einsteckrichtung (Z) hinteren Ende eine Radialdichtungsanordnung (26) aufweist, und wobei zwischen dem in Einsteckrichtung (Z) vorderen Ende der Überwurfmutter (21) und der Anschlagbuchse (22) die Zahnscheibe (1) koaxial angeordnet ist, **gekennzeichnet dadurch, dass** die Zahnscheibe (1) gemäß den Merkmalen eines der vorgenannten Ansprüche 1 bis 22 ausgebildet ist.

## Claims

1. Toothed disk (1) for fastening a media line (16) having a circular insertion opening (3), wherein at a periphery of the insertion opening (3), next to each other arranged elastic holding teeth (4), separated from each other by shear cutted slots (6), form an inner holding section (2), wherein in the axial direction, the holding teeth (4) extend at an angle to a longitudinal axis extending perpendicularly to the circle plane through a center point (M) of the insertion opening (3) in such a way that the holding teeth include an obtuse angle (α) together with a mounting section (8), wherein each holding tooth (4) is connected to the outer mounting section (8) by means of at least one connecting web (11), wherein punch-outs (9) are formed between the connecting webs (11), and wherein the mounting section (8) is arranged on a peripheral circle around the insertion opening (3) and lies in a mounting plane which extends parallel to the circle plane spanned by the insertion opening (3), wherein each holding tooth (4) of the inner holding section (2) is connected to the mounting section (8) by at least two connecting webs (11) **characterized in that** the mounting section (8) is designed as an enclosed ring.

2. Toothed disk (1) according to claim 1,
**characterized in that** the holding teeth (4) together have a perimeter wrapping angle of at least 70%, in particular of 75% to 95% of the perimeter of the media line (16).

3. Toothed disk (1) according to claim 1 or 2,
**characterized in that** the connecting webs (11) are formed by punch-outs (9), in particular arc-shaped punch-outs, extending in the perimeter direction.

4. Toothed disk (1) according to claim 3,
**characterized in that** the punch-outs (9) lie on an arc-shaped center line (K) on a circle concentric to the insertion opening (3).

5. Toothed disk (1) according to one of claims 1 to 4,
**characterized in that** the inner holding section (2) features three to six holding teeth (4).

6. Toothed disk (1) according to one of claims 1 to 5,
**characterized in that** the holding teeth (4) have the same dimensions.

7. Toothed disk (1) according to one of claims 1 to 6,
**characterized in that** each of the holding teeth (4) features a middle section (4a) which is disposed between the connecting webs (11), and edge sections (4b, 4c) which protrude from the middle section (4a) to the side over the connecting webs 11 and end at the slots (6), wherein the perimeter width of the middle sections (4a) and/or edge sections (4b and 4c) is dimensioned such that it is defined proceeding from a center line (Y) of the connecting webs (11), and wherein the width of the edge sections (4b, 4c) amounts to one-sixth to one-fourth, preferably one-fifth, of the total width of the holding teeth (4), and the perimeter width of the middle sections (4a) amounts to four-sixths up to two-fourths, preferably three-fifths, of the total width of the holding teeth (4).

8. Toothed disk (1) according to one of claims 1 to 7,
**characterized in that** the toothed disk (1) is formed as a punched, flexible component and consists of an elastic material, in particular spring steel.

9. Toothed disk (1) according to claim 8,
**characterized in that** the elastic material has a material thickness of 0.1 mm to 0.4 mm, in particular of 0.2 mm to 0.25 mm.

10. Toothed disk (1) according to one of claims 1 to 9,
**characterized in that** the mounting section (8) features a radial width of at least two-times up to four-times the material thickness, and preferably amounts to 0.5 mm to 1.0 mm.

11. Toothed disk (1) according to one of claims 1 to 10,
**characterized in that** the width of the connecting webs (11) measured in the perimeter direction amounts to two-times up to three-times the material thickness of the used material of the toothed disk (1).

12. Toothed disk (1) according to one of claims 1 to 11,
**characterized in that** the obtuse angle (α) amounts to 120° to150°, preferably 130° to 140°.

13. Toothed disk (1) according to one of claims 1 to 12,
**characterized in that** the slots (6) feature a width of 0.15 mm to 0.4 mm.

14. Toothed disk (1) according to one of claims 3 to 13,
**characterized in that** each slot (6) emanates from one of the punch-outs (9).

15. Toothed disk (1) according to claim 14,
**characterized in that** the punch-outs (9) in which the slots (6) end, feature a smaller perimeter width than the other punch-outs (9).

16. Toothed disk (1) according to one of claims 3 to 14,
**characterized in that** all punch-outs (9) feature the same perimeter width.

17. Toothed disk (1) according to one of claims 1 to 16,
**characterized in that** the insertion opening (3) after the punching and before the bending, is 5 to 15% smaller than the outside diameter of the media line feeding through the insertion opening (3).

18. Toothed disk (1) according to one of claims 1 to 17,
**characterized in that** the diameter of the insertion opening (3) after the bending, is smaller than the outside diameter of the media line (16), and in particular is 2% to 10% greater than the diameter of the insertion opening (3) before the bending of the holding teeth (4).

19. Toothed disk (1) according to one of claims 1 to 18,
**characterized in that** each holding tooth (4) is designed such that along the insertion opening (3) there is an end edge (10) of the holding tooth, such that when under load, each end edge penetrates into a corner region of the edge section (4b, 4c) to such a penetration depth into the media line (16) that each holding tooth (4) with its end edge (10) features at the inserted and fastened media line (16) a single wrapping angle, in which its contact surface with fastening function amounts to between 55° and 105°, of a maximum wrapping angle of 360°.

20. Toothed disk (1) according to one of claims 1 to 19,
**characterized in that** the slots (6) are designed as radial punch-outs with material removal.

21. Toothed disk (1) according to one of claims 1 to 20,
**characterized in that** each holding tooth (4) features an enclosed perimeter punch-out (9), wherein the enclosed punch-out is wrapped by an angle of 360 degrees at the edge (30) formed at the enclosed punch-out (9).

22. Toothed disk (1) according to claim 21,
**characterized in that** the edge (30) enclosing the punch-out (9) along the perimeter at an angle of 360 degrees is formed exclusively at the holding tooth (4), at the two connecting webs (11) and at the mounting section (8).

23. Connecting arrangement for feedthrough plug-connecting of a media line (16), comprising a toothed disk (1) and a union nut (21) penetrated by the media line (16) along a pass-through opening, wherein the union nut (21) is connected in one insertion direction (Z) frontally to a contact bushing (22) and to a receiving tube (28), wherein the union nut (21) features a radial gasket arrangement (26) at its rear end in the insertion direction (Z), and wherein the toothed disk (1) is disposed coaxially between the front end of the union nut (21) in the insertion direction (Z) and the contact bushing (22), **characterized in that** the toothed disk (1) is formed according to the features of the preceding claims 1 to 22.

## Revendications

1. Disque denté (1) servant à fixer une conduite de fluides (16), comprenant une ouverture d'enfichage circulaire (3), des dents de retenue (4) disposées au niveau d'une périphérie de l'ouverture d'enfichage (3), séparées respectivement les unes des autres par une fente (6) formée par cisaillage, juxtaposées et élastiques formant une partie de retenue intérieure (2), les dents de retenue (4) s'étendant dans la direction axiale de manière inclinée par rapport à un axe longitudinal s'étendant perpendiculairement au plan de cercle et passant par le centre (M) de l'ouverture d'enfichage (3) de telle sorte que les dents de retenue (4) forment, avec une partie de montage (8), un angle obtus (α), chaque dent de retenue (4) étant reliée à la partie de montage (8) située à l'extérieur par le biais d'au moins un élément de liaison (11), des découpes (9) étant formées entre les éléments de liaison (11) et la partie de montage (8) étant disposée respectivement sur un cercle périphérique autour de l'ouverture d'enfichage (3) et se situant dans un plan de montage qui s'étend parallèlement au plan de cercle défini par l'ouverture d'enfichage (3), chaque dent de retenue (4) de la partie de retenue intérieure (2) étant reliée à la partie de montage (8) par au moins deux éléments de liaison (11), **caractérisé en ce que** la partie de montage (8) est réalisée sous forme de bague fermée.

2. Disque denté (1) selon la revendication 1, **caractérisé en ce que** les dents de retenue (4) forment conjointement un angle de contact périphérique d'au moins 70 %, en particulier de 75 % à 95 %, de la périphérie de la conduite de fluides (16).

3. Disque denté (1) selon la revendication 1 ou 2,
**caractérisé en ce que** les éléments de liaison (11) sont formés par des découpes (9) en particulier en forme d'arc de cercle et s'étendant dans la direction périphérique.

4. Disque denté (1) selon la revendication 3,
**caractérisé en ce que** les découpes (9) se situent sur une ligne médiane (K) en forme d'arc de cercle sur un cercle concentrique à l'ouverture d'enfichage (3).

5. Disque denté (1) selon l'une des revendications 1 à 4,
**caractérisé en ce que** la partie de retenue intérieure (2) comprend de trois à six dents de retenue (4).

6. Disque denté (1) selon l'une des revendications 1 à 5, **caractérisé en ce que** les dents de retenue (4) présentent les mêmes dimensions.

7. Disque denté (1) selon l'une des revendications 1 à 6,
**caractérisé en ce que** chacune des dents de retenue (4) comprend une partie médiane (4a) qui est disposée entre les éléments de liaison (11) et des parties de bord (4b, 4c) qui font saillie latéralement au-delà des éléments de liaison (11) dans le prolongement de la partie médiane (4a) et se terminent au niveau des fentes (6), la largeur périphérique des parties médianes (4a) et des parties de bord (4b et 4c) étant dimensionnée de telle sorte qu'elle est déterminée à partir d'une ligne médiane (Y) des éléments de liaison (11), et la largeur des parties de bord (4b, 4c) étant comprise entre un sixième et un quart, de préférence égale à un cinquième, de la largeur totale des dents de retenue (4), et la largeur périphérique des parties médianes (4a) étant comprise entre quatre sixièmes et deux quarts, de préférence égale à trois cinquièmes, de la largeur totale des dents de retenue (4) .

8. Disque denté (1) selon l'une des revendications 1 à 7,
**caractérisé en ce que** le disque denté (1) est réalisé sous forme de pièce estampée pliée et est constitué de matériau élastique, en particulier d'acier à ressorts.

9. Disque denté (1) selon la revendication 8, **caractérisé en ce que** le matériau élastique présente une épaisseur de matériau de 0,1 mm à 0,4 mm, en particulier de 0,2 mm à 0,25 mm.

10. Disque denté (1) selon l'une des revendications 1 à 9,
**caractérisé en ce que** la partie de montage (8) présente une largeur radiale comprise entre au moins le double et le quadruple de l'épaisseur de matériau et de préférence de 0,5 mm à 1,0 mm.

11. Disque denté (1) selon l'une des revendications 1 à 10,
**caractérisé en ce que** la largeur des éléments de liaison (11) est, mesurée dans la direction périphérique, comprise entre le double et le triple de l'épaisseur du matériau utilisé pour le disque denté (1).

12. Disque denté (1) selon l'une des revendications 1 à 11,
**caractérisé en ce que** l'angle obtus (α) est compris entre 120° et 150°, de préférence entre 130° et 140°.

13. Disque denté (1) selon l'une des revendications 1 à 12,
**caractérisé en ce que** les fentes (6) présentent une largeur de 0,15 mm à 0,4 mm.

14. Disque denté (1) selon l'une des revendications 3 à 13,
**caractérisé en ce que** chaque fente (6) part respectivement de l'une des découpes (9).

15. Disque denté (1) selon la revendication 14,
**caractérisé en ce que** les découpes (9) dans lesquelles les fentes (6) se terminent présentent sur la périphérie une largeur inférieure à celle des découpes (9) restantes.

16. Disque denté (1) selon l'une des revendications 3 à 14,
**caractérisé en ce que** toutes les découpes (9) présentent la même largeur sur la périphérie.

17. Disque denté (1) selon l'une des revendications 1 à 16,
**caractérisé en ce que** l'ouverture d'enfichage (3) est, après le découpage et avant le pliage, inférieure de 5 à 15 % au diamètre extérieur de la conduite de fluides à guider à travers l'ouverture d'enfichage (3).

18. Disque denté (1) selon l'une des revendications 1 à 17,
**caractérisé en ce que** le diamètre de l'ouverture d'enfichage (3) après le pliage est inférieur au diamètre extérieur de la conduite de fluides (16) et est en particulier supérieur de 2 % à 10 % au diamètre de l'ouverture d'enfichage (3) avant le pliage des dents de retenue (4).

19. Disque denté (1) selon l'une des revendications 1 à 18,
**caractérisé en ce que** chaque dent de retenue (4) est réalisée de telle sorte qu'une arête d'extrémité (10) de la dent de retenue (4) s'étend le long de l'ouverture d'enfichage (3), laquelle arête d'extrémité présente respectivement, dans une région de coin des parties de bord (4b, 4c), en cas de sollicitation, une profondeur de pénétration dans la conduite de fluides (16) telle que chaque dent de retenue (4) définit par son arête d'extrémité (10), au niveau de la conduite de fluides (16) enfichée et fixée, un angle de contact unique dans lequel sa surface de contact à fonction de fixation est comprise entre 55° et 105° d'un angle de contact maximal de 360°.

20. Disque denté (1) selon l'une des revendications 1 à 19,
**caractérisé en ce que** les fentes (6) sont réalisées sous forme de découpes radiales avec enlèvement de matière.

21. Disque denté (1) selon l'une des revendications 1 à 20,
**caractérisé en ce que** chaque dent de retenue (4) comprend une découpe (9) fermée de manière périphérique, la découpe fermée (9) étant entourée sur un angle de 360° par un bord (30) formé de manière périphérique sur la découpe fermée (9).

22. Disque denté (1) selon la revendication 21,
**caractérisé en ce que** le bord (30) entourant la découpe (9) de manière périphérique sur un angle de 360° est formé exclusivement sur la dent de retenue (4), sur les deux éléments de liaison (11) et sur la partie de montage (8) .

23. Ensemble de liaison pour la liaison par enfichage traversante d'une conduite de fluide (16), comportant un disque denté (1) et un écrou d'accouplement (21) traversé par la conduite de fluides (16) le long d'une ouverture traversante (19), l'écrou d'accouplement (21) étant relié à une douille de butée (22) à l'avant dans une direction d'enfichage (Z) et étant relié à une tubulure de réception (28), l'écrou d'accouplement (21) comprenant un ensemble d'étanchéité radiale (26) à son extrémité arrière dans la direction d'enfichage (Z), et le disque denté (1) étant disposé coaxialement entre l'extrémité, à l'avant dans la direction d'enfichage (Z), de l'écrou d'accouplement (21) et la douille de butée (22), **caractérisé en ce que** le disque denté (1) est réalisé selon les caractéristiques de l'une des revendications 1 à 22 susmentionnées.
